# EUROPÄISCHE PATENTANMELDUNG

(11) **EP 2 506 521 A1**
(43) Veröffentlichungstag der Anmeldung: **03.10.2012**
(21) Anmeldenummer: 11160656.2
(22) Anmeldetag: 31.03.2011
(51) Int. Cl.: H04L 29/06, G05B 19/02

(54) **Kommunikation in einem Automatisierungsnetzwerk**

(71) Anmelder: Siemens Aktiengesellschaft, 80333 München (DE)
(72) Erfinder: Bernhard, Rene, 91052 Erlangen (DE); Klemm, Sieghard, 76185 Karlsruhe (DE)

(57) **Zusammenfassung**

Die Erfindung betrifft ein Verfahren zur Kommunikation in einem Automatisierungsnetzwerk, wobei das Verfahren durch eine Leitsystemkomponente (100) mit einem Sicherheitsmodul (104) (104) durchgeführt wird und die folgenden Schritte umfasst:
- Empfang (S1) oder Ausgabe von Daten, wobei die Daten Nutzerdaten und Automatisierungsdaten umfassen, wobei die Nutzerdaten unter Verwendung eines Nutzerdatenprotokolls und die Automatisierungsdaten unter Verwendung eines Automatisierungsdatenprotokolls empfange oder ausgegeben werden,
- Detektion (S2) durch das Sicherheitsmodul (104), ob ein Empfang oder eine Ausgabe der Daten durch die Leitsystemkomponente (100) erlaubt ist,
- Blockierung (S4) der Daten durch das Sicherheitsmodul (104), falls detektiert wurde, dass die Daten nicht empfangen oder ausgegeben werden dürfen.

## Beschreibung

Die Erfindung betrifft ein Verfahren zur Kommunikation in einem Automatisierungsnetzwerk, insbesondere ein Verfahren zur Kommunikation von Nutzerdaten und Automatisierungsdaten in einem Automatisierungsnetzwerk.

Aus dem Stand der Technik sind Leitsystemkomponenten von Automatisierungsnetzwerken bekannt, die mittels einer sogenannten Firewall den Zugriff auf die Leitsystemkomponente von au-βen über das Automatisierungsnetzwerk beschränken können. Der Zugriff auf die Leitsystemkomponente wird aus Sicherheitsgründen für das Automatisierungsnetzwerk beschränkt.

Demgegenüber liegt der Erfindung die Aufgabe zugrunde, ein verbessertes Verfahren zur Kommunikation in einem Automatisierungsnetzwerk, eine verbesserte Leitsystemkomponente, ein verbessertes Automatisierungsnetzwerk und ein verbessertes Computerprogrammprodukt zu schaffen.

Die Aufgabe der Erfindung wird mit den unabhängigen Patentansprüchen gelöst. Ausführungsformen der Erfindung sind in den abhängigen Patentansprüchen gegeben.

Die Erfindung betrifft ein Verfahren zur Kommunikation in einem Automatisierungsnetzwerk. Das Verfahren wird durch eine Leitsystemkomponente mit einem Sicherheitsmodul durchgeführt.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein-und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Unter einer Leitsystemkomponente wird hier beispielsweise ein Computer verstanden, der durch einen Benutzer bedienbar ist und der zur Überwachung des Automatisierungsnetzwerks und des Produktionsprozesses, der durch Netzwerkgeräte des Automatisierungsnetzwerks durchgeführt wird, verwendet wird. Beispielsweise können einem Benutzer Informationen über das Automatisierungsnetzwerk und/oder dem Produktionsprozess auf einem Bildchen der Leitsystemkomponente dargestellt werden. Der Benutzer kann einzelne Netzwerkgeräte oder Komponenten von diesen Netzwerkgeräten mittels der Leitsystemkomponente steuern und/oder überwachen.

Das Sicherheitsmodul der Leitsystemkomponente dient zur Absicherung des Automatisierungsnetzwerks und zur Absicherung der Leitsystemkomponente. Von anderen Netzwerkgeräten des Automatisierungsnetzwerks empfangene Daten werden durch das Sicherheitsmodul nach Sicherheitsregeln überprüft. Diese Sicherheitsregeln können beispielsweise bestimmen, welche Daten durch die Leitsystemkomponente empfangen werden dürfen. Hierfür können als Kriterien beispielsweise die Herkunft der Daten, das Ziel der Daten, die Protokollart und/oder der Netzwerkanschluss der Leitsystemkomponente, über den die Daten empfangen wurden, verwendet werden.

Alternativ oder zusätzlich kann das Sicherheitsmodul auch Daten überprüfen, die von der Leitsystemkomponente an andere Netzwerkgeräte des Automatisierungsnetzwerks ausgegeben werden. Auch hierbei können Regeln verwendet werden, die die gleichen Kriterien wie oben beschrieben anwenden. Es ist zu beachten, dass für den Empfang und die Ausgabe der Daten unterschiedliche Regeln zur Anwendung kommen können. Beispielsweise kann der Empfang von Daten von einem ersten Netzwerkgerät durch die Leitsystemkomponente erlaubt sein, wohingegen die Ausgabe von Daten an dieses Netzwerkgerät durch die Leitsystemkomponente nicht erlaubt ist. Das gleiche gilt für die übrigen durch die Regeln angewandten Kriterien.

Es werden Daten durch die Leitsystemkomponente empfangen oder ausgegeben. Die Daten umfassen Nutzerdaten und Automatisierungsdaten. Die Nutzerdaten wurden unter Verwendung eines Nutzerdatenprotokolls und die Automatisierungsdaten unter Verwendung eines Automatisierungsdatenprotokolls empfangen oder ausgegeben.

Ein Automatisierungsdatenprotokoll kann hier beispielsweise ein Automatisierungsprotokoll wie oben beschrieben sein. Ein Nutzerdatenprotokoll kann ein Protokoll sein, welches nicht für die Übertragung von Automatisierungsdaten zu einem Automatisierungsgerät verstanden wird.

Unter Nutzerdaten werden hier beispielsweise Internetdaten, E-Mail-Daten, Videodaten, die kein Automatisierungsgerät des Automatisierungsnetzwerks betreffen, oder Daten eines Datei-Downloads verstanden. Unter Automatisierungsdaten werden solche Daten verstanden, die mittels eines der oben genannten Automatisierungsprotokolle innerhalb des Automatisierungsnetzwerks zu den Automatisierungsgeräten übertragen werden oder von den Automatisierungsgeräten empfangen werden. Dies können beispielsweise Messdaten eines Sensors oder Daten zur Ansteuerung eines Aktuators sein. Außerdem können die Automatisierungsdaten zyklisch übertragene Daten sein. Dies heißt, dass die Daten regelmäßig in gleichen Zeitabständen zu den gleichen Automatisierungsgeräten übertragen werden. Die Automatisierungsdaten können außerdem Echtzeitdaten oder auch deterministische Daten sein. Dies bedeutet, dass die Echtzeitdaten oder die deterministischen Daten während ihrer Übertragung nur unwesentlich verzögert werden dürfen. Mit anderen Worten muss eine Übertragung der Echtzeitdaten oder der deterministischen Daten unverzüglich erfolgen, um unnötige Verzögerungen bei der Datenübertragung zu vermeiden. Die Echtzeitdaten oder die deterministischen Daten sind wichtig für die korrekte Funktionsweise des Produktionsprozesses, der durch die Automatisierungsgeräte durchgeführt wird.

Das Sicherheitsmodul detektiert, ob ein Empfang oder eine Ausgabe der Daten durch die Leitsystemkomponente erlaubt ist. Dies geschieht vorzugsweise unter Anwendung von Regeln, die Kriterien wie die Herkunft der Daten, das Ziel der Daten, die Protokollart und der Empfangs- oder Ausgabenetzwerkanschluss der Leitsystemkomponente berücksichtigen.

Die Daten werden durch das Sicherheitsmodul blockiert und somit nicht an andere Komponenten der Leitsystemkomponente weitergeleitet, falls durch das Sicherheitsmodul zuvor detektiert wurde, dass die Daten nicht empfangen oder ausgegeben werden dürfen. Im Falle, dass Daten durch die Leitsystemkomponente ausgegeben werden sollen und von dem Sicherheitsmodul blockiert werden, erfolgt keine Ausgabe der Daten an irgendeine andere Komponente des Automatisierungsnetzwerks.

Nach Ausführungsformen der Erfindung werden bei der Detektion eine Herkunft der Daten, ein Ziel der Daten, eine Protokollart, die für den Empfang oder die Ausgabe der Daten verwendet wurde, und/oder ein Netzwerkanschluss der Leitsystemkomponente, über den die Daten empfangen wurden, überprüft.

Nach Ausführungsformen der Erfindung werden bei der Detektion Regeln angewandt, die definieren, für welche Herkunft der Daten, welches Ziel der Daten, welche Protokollart und/oder welchen Netzwerkanschluss der Empfang oder die Ausgabe der Daten erlaubt ist. Die Regeln können dabei von einem Benutzer über eine einzige Benutzeroberfläche einstellbar sein.

Ausführungsformen der Erfindung sind besonders vorteilhaft, weil die Detektion durch das Sicherheitsmodul, ob ein Empfang oder die Ausgabe der Daten erlaubt ist, durch ein einziges Sicherheitsmodul durchgeführt wird. Dabei ist es unerheblich, ob es sich um Automatisierungsdaten oder Nutzerdaten handelt. Es können sowohl Automatisierungsdaten als auch Nutzerdaten durch das Sicherheitsmodul hinsichtlich der oben genannten Kriterien und/oder Regeln überprüft werden. Es ist also nicht nötig, dass Nutzerdaten durch ein anderes Sicherheitsmodul als die Automatisierungsdaten überprüft werden.

Außerdem ist vorteilhaft, dass die Regeln durch einen Benutzer über eine einzige Benutzeroberfläche einstellbar sind. Für den Benutzer ist dies komfortabler als die Einstellung zweier verschiedener Sicherheitsmodule über zwei verschiedene Benutzeroberflächen. Der Benutzer kann so einfach und komfortabel beispielsweise dem Empfang von Nutzerdaten und Automatisierungsdaten von einem bestimmten Netzwerkgerät des Automatisierungsnetzwerks durch einen einzigen Mausklick blockieren. Alternativ kann mit der gleichen Benutzeroberfläche festgelegt werden, dass beispielsweise von diesem Netzwerkgerät lediglich Automatisierungsdaten empfangen werden dürfen, aber keine Automatisierungsdaten zu diesem Netzwerkgerät ausgegeben werden dürfen. Es ist auch möglich zu definieren, dass beispielsweise Nutzerdaten von diesem Netzwerkgerät empfangen werden dürfen, aber nicht an dieses Gerät ausgegeben werden dürfen oder umgekehrt. Andere Kombinationen für die Definition der Regeln sind leicht für den Fachmann vorstellbar.

Nach Ausführungsformen der Erfindung werden mehrere Tunnel zu Netzwerkgeräten eines Teilnetzwerks des Automatisierungsnetzwerks von der Leitsystemkomponente eingerichtet. Jeder Tunnel umfasst einen ersten Endpunkt in der Leitsystemkomponente und einen zweiten Endpunkt in genau einem der Netzwerkgeräte. Jeder Tunnel verbindet also eines der Netzwerkgeräte mit der Leitsystemkomponente. Die Tunnel können durch mehrere weitere Netzwerkgeräte des Automatisierungsnetzwerks verlaufen. Beispielsweise kann ein Tunnel von der Leitsystemkomponente über einen Netzwerkknoten A und einen Netzwerkknoten B zu einem Netzwerkgerät C führen. Auch ein direkter Tunnel zwischen der Leitsystemkomponente A und einem Netzwerkgerät D ist möglich. Das Teilnetzwerk besteht aus allen Netzwerkgeräten, die über einen Tunnel mit der Leitsystemkomponente verbunden sind. Die Tunnel können zum Beispiel Tunnel eines virtuellen privaten Netzwerks (VPN) sein.

Die Leitsystemkomponente ordnet jedem Tunnel ein an diesen Tunnel angeschlossenes Netzwerkgerät zu. Hierfür wird eine Adresse dieses Netzwerkgeräts verwendet. Beispielsweise kann hierfür die sogenannte Medium Access Control-Adresse (MAC) oder eine Adresse des Internetprotokolls (IP) verwendet werden. Die Netzwerkkomponente kann also mehrere Tunnel zu mehreren Netzwerkgeräten aufbauen. Dabei wird jedem Tunnel mittels der Adresse das daran angeschlossene Netzwerkgerät zugeordnet. Somit wird vermieden, dass Daten, die an ein erstes Netzwerkgerät gesendet werden sollen, über den falschen Tunnel an ein zweites Netzwerkgerät gesendet werden. Beispielsweise kann in der Leitsystemkomponente eine Tabelle angelegt werden, in der jedem Tunnel die Adresse des zugehörigen Netzwerkgeräts zugeordnet ist. Tunnel A kann beispielsweise die Adresse 1 und Tunnel B die Adresse 2 zugeordnet sein.

Die Netzwerkgeräte des Automatisierungsnetzwerks sind außerdem ebenfalls dazu ausgebildet, mehrere Tunnel zu mehreren Netzwerkgeräten des Automatisierungsnetzwerks einzurichten.

Die Datenübertragung innerhalb des Teilnetzwerks erfolgt durch die Tunnel. Außerdem erfolgt die Datenübertragung mittels eines ersten Protokolls innerhalb einer Datenstruktur des ersten Protokolls durch die Tunnel. Das erste Protokoll ermöglicht ein Routing der Daten in dem Netzwerk. Beispielsweise kann das erste Protokoll das sogenannte Internetprotokoll (IP) sein. Die Datenstruktur des ersten Protokolls können Pakete, sogenannte IP-Pakete, sein.

In der Datenstruktur des ersten Protokolls sind die Daten verpackt. Nach dem Empfang der Daten werden die Daten aus der Datenstruktur entpackt. Die Daten weisen nach dem Entpacken keine Routinginformationen für ein Routing in dem Netzwerk auf. Dies kann beispielsweise dann der Fall sein, wenn es sich um Daten eines Protokolls nach Layer2 des OSI-Schichtmodells handelt. Layer2-Protokolle werden vor allem zur Kommunikation in sogenannten Hochverfügbarkeits-Automatisierungsnetzwerken verwendet.

Die Daten werden also durch die Tunnel mittels des ersten Protokolls gesendet und empfangen. Da das erste Protokoll zum Senden und Empfangen verwendet wird, können die Daten innerhalb des Netzwerks geroutet werden. Ein Routing der Daten, wenn sie sich nicht innerhalb der Datenstruktur des ersten Protokolls befinden, ist in dem Automatisierungsnetzwerk nicht möglich.

Nach Ausführungsformen der Erfindung sind die Daten Daten eines zweiten Protokolls und das zweite Protokoll ist für eine Hochverfügbarkeits-Kommunikation innerhalb des Automatisierungsnetzwerks ausgebildet.

Nach Ausführungsformen der Erfindung ist das Netzwerkgerät, in dem sich der andere Tunnelendpunkt befindet, eine Steuerungseinheit des Automatisierungsnetzwerks. Die Steuerungseinheit steuert den Produktionsprozess, der durch weitere Netzwerkgeräte des Automatisierungsnetzwerks durchgeführt wird. Die Steuerungseinheit richtet weitere Endpunkte weiterer Tunnel des Teilnetzwerks zu den weiteren Netzwerkgeräten ein, sodass die Kommunikation zwischen den Netzwerkgeräten und der Steuerungseinheit durch die Tunnel innerhalb des Teilnetzwerks erfolgen kann. Die Steuerungseinheit ordnet jedem dieser Tunnel das jeweils an diesen Tunnel angeschlossene Netzwerkgerät unter Verwendung zumindest einer Adresse zu. Diese Adresse kann beispielsweise eine IP-Adresse oder eine Medium Access Control-Adresse sein.

Nach Ausführungsformen der Erfindung ist das erste Protokoll ein Internetprotokoll. Die Datenstruktur umfasst Datenpakete. Die Daten werden aus den Datenpaketen entpackt.

Nach Ausführungsformen der Erfindung umfasst das Automatisierungsnetzwerk weitere Leitsystemkomponenten. Jede der Leitsystemkomponenten richtet mehrere Tunnel des Teilnetzwerks ein und ordnet jedem der Tunnel jeweils eine an diesen Tunnel angeschlossene Leitsystemkomponente unter Verwendung zumindest einer Adresse der Leitsystemkomponente zu.

Es können also nach Ausführungsformen der Erfindung sowohl die Steuerungseinheit als auch die Leitsystemkomponenten mehrere Tunnel zu mehreren Netzwerkgeräten und/oder Leitsystemkomponenten aufbauen. Dies ist vorteilhaft, da so die Kommunikation von einer Leitsystemkomponente zur anderen und/oder von einer Leitsystemkomponente zur Steuerung komplett gesichert über den Tunnel erfolgen kann. Hierfür wird ein sicheres Protokoll, zum Beispiel IPsec, verwendet. Somit ist ein Auslesen oder Verändern der Daten nicht möglich. Dies ist insbesondere vorteilhaft, wenn es sich um Hochverfügbarkeitsdaten oder sicherheitsrelevante Daten handelt.

Es wird also der gesamte Weg zwischen der Leitsystemkomponente und der Steuerung und/oder einer anderen Leitsystemkomponente durch den Tunnel gesichert.

In einem weiteren Aspekt betrifft die Erfindung eine Leitsystemkomponente für ein Automatisierungsnetzwerk. Die Leitsystemkomponente umfasst Mittel zum Empfang oder zur Ausgabe von Daten, wobei die Daten Nutzerdaten und Automatisierungsdaten umfassen können. Außerdem weist die Leitsystemkomponente ein Sicherheitsmodul auf. Das Sicherheitsmodul ist zur Detektion, ob ein Empfang oder eine Ausgabe der Daten durch die Leitsystemkomponente erlaubt ist, und zur Blockierung der Daten ausgebildet, falls detektiert wurde, dass die Daten nicht empfangen oder ausgegeben werden dürfen.

In einem weiteren Aspekt betrifft die Erfindung ein Automatisierungsnetzwerk mit einer Leitsystemkomponente nach Ausführungsformen der Erfindung.

In noch einem weiteren Aspekt betrifft die Erfindung ein Computerprogrammprodukt mit Instruktionen. Die Instruktionen veranlassen bei Ausführung durch eine Leitsystemkomponente, die Leitsystemkomponente zur Durchführung eines Verfahrens nach Ausführungsformen der Erfindung.

Nachfolgend werden Ausführungsformen der Erfindung anhand der Figuren näher erläutert. Es zeigen:
- Figur 1: ist ein Blockdiagramm einer Leitsystemkomponente nach einer Ausführungsform der Erfindung,
- Figur 2: ist ein Flussdiagramm eines Verfahrens nach Ausführungsformen der Erfindung.

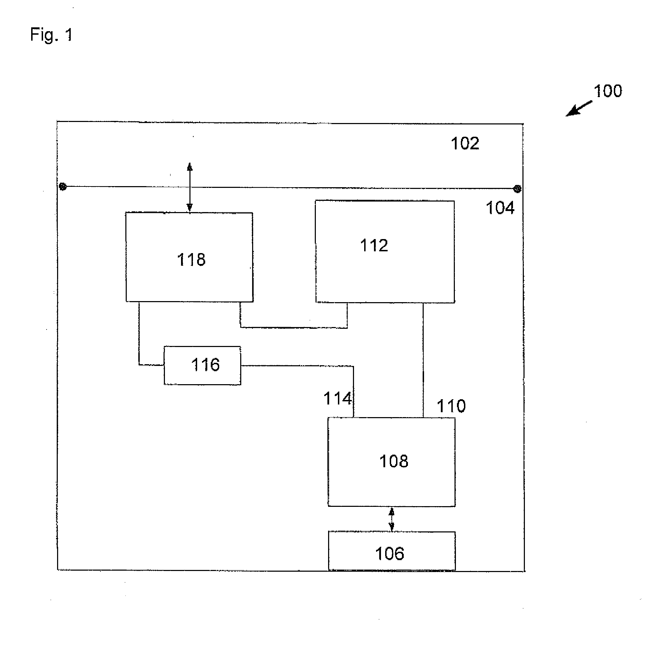

Figur 1 ist ein Blockdiagramm einer Leitsystemkomponente 100. Die Leitsystemkomponente 100 umfasst ein Benutzermodul 102 und ein Sicherheitsmodul 104. Das Benutzermodul 102 kann beispielsweise ein Computer sein, der über eine Tastatur und einen Bildschirm verfügt. Der Bildschirm kann beispielsweise zur Anzeige von Informationen für einen Benutzer benutzt werden und die Tastatur kann für Benutzereingaben benutzt werden. Der Benutzer kann beispielsweise das Benutzermodul 102 zur Steuerung von Automatisierungsgeräten des Automatisierungsnetzwerks, in dem sich die Leitsystemkomponente 100 befindet, nutzen.

Das Sicherheitsmodul 104 umfasst beispielsweise eine Komponente 108. Durch die Komponente 108 werden die empfangenen Daten nach verschiedenen Protokollen aufgeteilt. Beispielsweise werden Daten, die mittels des Protokolls IPsec empfangen wurden, über einen ersten Pfad 110 an eine Sicherheitskomponente 112 ausgegeben und Daten, die nicht unter Verwendung von IPsec empfangen wurden, werden über Pfad 114 an die zweite Sicherheitskomponente 116 ausgegeben. In der Sicherheitskomponente 116 werden Regeln für eine Detektion angewandt, die definieren, welche Daten durch die Sicherheitskomponente 116 weitergeleitet werden dürfen. Die Regeln können dabei definieren, dass Daten mit einer bestimmten Herkunft, Daten, die mittels eines bestimmten Protokolls übertragen wurden, oder Nutzdaten generell nicht oder Automatisierungsdaten generell nicht weitergeleitet werden dürfen. Die Regeln können beispielsweise durch einen Benutzer festgelegt worden sein. Die Regeln werden bei der Detektion angewandt, ob die empfangenen Daten durch die zweite Sicherheitskomponente 116 weitergeleitet werden dürfen. Falls detektiert wird, dass eine Weiterleitung der Daten nicht erlaubt ist, wird keine Weiterleitung durchgeführt und die Daten werden durch die zweite Sicherheitskomponente 116 blockiert. Die zweite Sicherheitskomponente ist zur Blockade von sowohl Automatisierungsdaten als auch Nutzerdaten ausgebildet.

Falls detektiert wird, dass eine Weiterleitung der Daten erlaubt ist, werden die Daten durch Komponente 118 weitergeleitet. Die Komponente 118 leitet die Daten dann an das Benutzermodul 102 weiter. Das Benutzermodul 102 kann dann die Daten beispielsweise einem Benutzer darstellen oder eine Benutzereingabe fordern.

Daten, die mittels IPsec durch die Leitsystemkomponente 100 empfangen wurden, werden wie oben erwähnt von der Komponente 108 an die erste Sicherheitskomponente 112 weitergeleitet. Die erste Sicherheitskomponente 112 ist zur Einrichtung von Tunneln ausgebildet. Die Tunnel können zu anderen Netzwerkgeräten des Automatisierungsnetzwerks führen. Außerdem ist die erste Sicherheitskomponente 112 dazu ausgebildet, mehrere Tunnel zu mehreren Netzwerkgeräten des Automatisierungsnetzwerks aufzubauen. Die erste Sicherheitskomponente 112 ist au-βerdem dazu ausgebildet, den verschiedenen Tunneln die jeweils daran angeschlossenen Netzwerkgeräte zuzuordnen. Beispielsweise wird einem Tunnel immer eine Adresse des jeweiligen Netzwerkgeräts zugeordnet. Die Adresse kann beispielsweise eine IP-Adresse oder eine MAC-Adresse sein. Zum Beispiel kann Tunnel A die IP-Adresse 192.168.01 zugeordnet sein und Tunnel B die IP-Adresse 192.168.02.

Die erste Sicherheitskomponente 112 ist außerdem dazu ausgebildet, zu detektieren, ob die empfangenen Daten weitergeleitet werden dürfen. Auch hier werden Regeln angewandt, um zu definieren, welche Daten weitergeleitet werden dürfen. Die Regeln können beispielsweise definieren, dass Daten, die von einem bestimmten Netzwerkgerät empfangen wurden, oder über einen bestimmten Netzwerkanschluss der Leitsystemkomponente 100 empfangen wurden, oder Daten, die von einem Gerät aus einem bestimmten IP-Bereich empfangen wurden, nicht weitergeleitet werden dürfen.

Falls eine Weiterleitung der Daten erlaubt ist, leitet die erste Sicherheitskomponente 112 die Daten an die Komponente 118 weiter. Die Komponente 118 leitet die Daten an das Benutzermodul 102 weiter.

Wenn Daten durch die Leitsystemkomponente 100 ausgegeben werden sollen, erfolgt der Datenfluss in umgekehrter Richtung. Die Daten werden also zunächst von dem Benutzermodul an das Sicherheitsmodul 104 übertragen. Im Sicherheitsmodul 104 detektiert die zweite Sicherheitskomponente 116, ob die Daten weitergeleitet werden dürfen, falls es sich um Daten handelt, die ohne IPsec übertragen werden sollen. Dies geschieht mittels der Regeln, die durch den Benutzer beispielsweise festgelegt wurden.

Falls es sich um Daten handelt, die mit IPsec übertragen werden sollen, entscheidet die erste Sicherheitskomponente 112, ob die Daten ausgegeben werden dürfen. Die erste Sicherheitskomponente ist außerdem dazu ausgebildet, die Daten durch einen der Tunnel zu einem Netzwerkgerät des Automatisierungsnetzwerks zu übertragen.

Die erste Sicherheitskomponente 112 ist außerdem dazu ausgebildet Daten, die keine Routinginformationen umfassen, in Datenstrukturen eines Protokolls zu packen, das ein Routing durch das Automatisierungsnetzwerk ermöglicht. Es kann beispielsweise der Fall sein, dass Daten eines Layer2-Protokolls gemäß des OSI-Schichtmodells durch einen der Tunnel übertragen werden sollen. Hierfür ist ein Routing der Daten nötig. Die erste Sicherheitskomponente 112 packt dann die Layer2-Daten beispielsweise in Pakete eines IP-Protokolls. Die Pakete des IP-Protokolls können dann durch die Tunnel übertragen werden, da ein Routing des IP-Protokolls möglich ist.

Sowohl die erste Sicherheitskomponente 112 als auch die zweite Sicherheitskomponente 116 detektieren, ob die Daten, die ausgegeben werden sollen, ausgegeben werden dürfen. Dies geschieht anhand von Regeln, die durch den Benutzer festgelegt werden können. Es ist zu beachten, dass unterschiedliche Regeln für die erste Sicherheitskomponente und für die zweite Sicherheitskomponente 116 festgelegt werden können. Die Festlegung der Regeln erfolgt allerdings über eine einzige Benutzeroberfläche, was den Komfort für den Benutzer erhöht. Die Regeln können außerdem unterschiedliche Kriterien für Automatisierungsdaten und Nutzerdaten definieren. Beispielsweise können strengere Kriterien für Automatisierungsdaten als für Benutzerdaten angewandt werden oder umgekehrt.

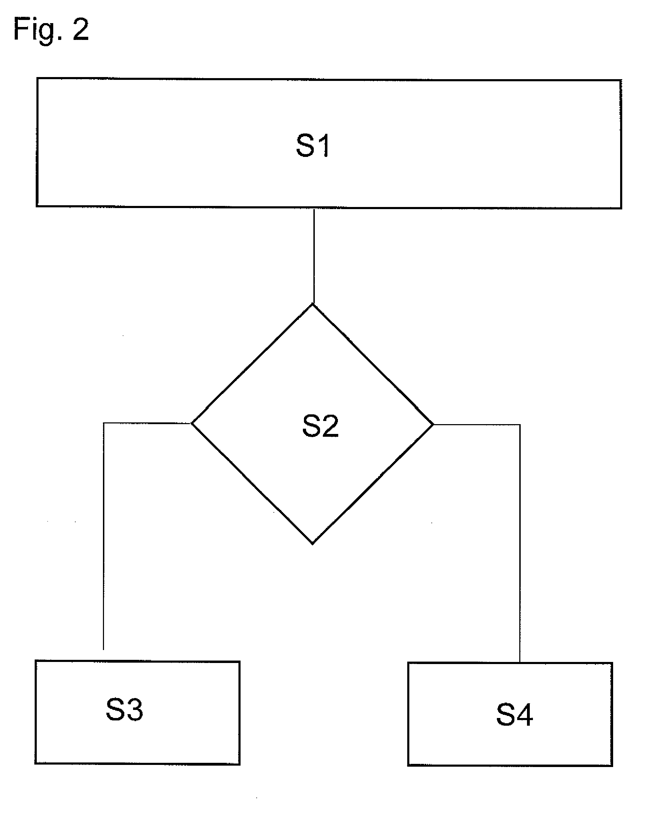

Figur 2 ist ein Flussdiagramm eines Verfahrens nach Ausführungsformen der Erfindung. In einem ersten Schritt S1 werden Daten durch die Leitsystemkomponente empfangen. Die Daten können Nutzerdaten oder Automatisierungsdaten umfassen. In einem zweiten Schritt S2 wird dann durch das Sicherheitsmodul aus Figur 1 detektiert, ob ein Empfang der Daten erlaubt ist. Bei der Detektion können durch das Sicherheitsmodul Regeln angewandt werden, die beispielsweise für eine bestimmte Herkunft der Daten oder eine bestimmte Protokollart den Empfang der Daten erlauben oder nicht erlauben. Falls ein Empfang der Daten erlaubt ist, erfolgt in Schritt S3 die Weiterleitung an das Benutzermodul 102 der Leitsystemkomponente. Falls ein Empfang der Daten nicht erlaubt ist, erfolgt in Schritt S4 die Blockierung der Daten. Die Blockierung der Daten bedeutet, dass die Daten nicht weitergeleitet werden.

Liste der Bezugszeichen
- 100: Leitsystemkomponente
- 102: Benutzermodul
- 104: Sicherheitsmodul
- 106: Netzwerkanschluss
- 108: Komponente
- 110: erster Pfad
- 112: erste Sicherheitskomponente
- 114: zweiter Pfad
- 116: zweite Sicherheitskomponente
- 118: Komponente

## Patentansprüche

1. Verfahren zur Kommunikation in einem Automatisierungsnetzwerk, wobei das Verfahren durch eine Leitsystemkomponente (100) mit einem Sicherheitsmodul (104) durchgeführt wird und die folgenden Schritte umfasst:
- Empfang (S1) oder Ausgabe von Daten, wobei die Daten Nutzerdaten und Automatisierungsdaten umfassen, wobei die Nutzerdaten unter Verwendung eines Nutzerdatenprotokolls und die Automatisierungsdaten unter Verwendung eines Automatisierungsdatenprotokolls empfange oder ausgegeben werden,
- Detektion (S2) durch das Sicherheitsmodul (104), ob ein Empfang oder eine Ausgabe der Daten durch die Leitsystemkomponente (100) erlaubt ist,
- Blockierung (S4) der Daten durch das Sicherheitsmodul (104), falls detektiert wurde, dass die Daten nicht empfangen oder ausgegeben werden dürfen.

2. Verfahren nach Anspruch 1, wobei bei der Detektion eine Herkunft der Daten, ein Ziel der Daten, eine Protokollart, die für den Empfang oder die Ausgabe der Daten verwendet wurde, und/oder ein Netzwerkanschluss der Leitsystemkomponente (100), über den die Daten empfangen wurden, überprüft werden.

3. Verfahren nach Anspruch 2, wobei bei der Detektion Regeln angewandt werden, die definieren, für welche Herkunft der Daten, welches Ziel der Daten, welche Protokollart und/oder welchen Netzwerkanschluss der Empfang oder die Ausgabe erlaubt ist, und wobei die Regeln von einem Benutzer über eine einzige Benutzeroberfläche einstellbar sind.

4. Verfahren nach einem der vorhergehenden Ansprüche, wobei das Verfahren ferner die folgenden Schritte umfasst:
- Einrichtung mehrerer Tunnel zu Netzwerkgeräten eines Teilnetzwerks des Automatisierungsnetzwerks in der Leitsystemkomponente (100), wobei jeder Tunnel einen ersten Endpunkt in der Leitsystemkomponente (100) und einen zweiten Endpunkt in genau einem der Netzwerkgeräte umfasst,
- Zuordnung jedes Tunnels zu dem an diesen Tunnel angeschlossenen Netzwerkgerät unter Verwendung zumindest einer Adresse dieses Netzwerkgeräts,
- Empfang der Automatisierungsdaten mittels eines ersten Protokolls innerhalb einer Datenstruktur des ersten Protokolls durch die Tunnel, wobei das erste Protokoll ein Routing der Automatisierungsdaten in dem Netzwerk ermöglicht,
- Entpacken der Automatisierungsdaten aus der Datenstruktur, wobei die Automtatisierungsdaten nach dem Entpacken keine Routinginformationen für ein Routing in dem Netzwerk umfassen.

5. Verfahren nach Anspruch 4, wobei es sich bei den Automatisierungsdaten um Daten eines zweiten Protokolls handelt, und wobei das zweite Protokoll für eine Hochsicherheitskommunikation innerhalb des Netzwerks ausgebildet ist.

6. Verfahren nach einem der Ansprüche 4 oder 5, wobei das Netzwerkgerät eine Steuerungseinheit des Automatisierungsnetzwerks ist, wobei die Steuerungseinheit einen Produktionsprozess steuert, wobei der Produktionsprozess durch weitere Netzwerkgeräte des Automatisierungsnetzwerks durchgeführt wird, wobei die Steuerungseinheit mehrere Endpunkte mehrerer Tunnel des Teilnetzwerks zu den weiteren Netzwerkgeräten einrichtet, und wobei die Steuerungseinheit jedem dieser Tunnel das jeweils an diesen Tunnel angeschlossene Netzwerkgerät unter Verwendung zumindest einer Adresse dieses Netzwerkgeräts zuordnet.

7. Verfahren nach einem der vorhergehenden Ansprüche, wobei das erste Protokoll ein Internetprotokoll ist, wobei die Datenstruktur Datenpakete umfasst, wobei die Automatisierungsdaten aus den Datenpaketen entpackt werden, und wobei die Adresse eine IP-Adresse und/oder eine MAC-Adresse des Netzwerkgeräts umfasst.

8. Verfahren nach einem der vorhergehenden Ansprüche, wobei das Netzwerk weitere Leitsystemkomponenten (100) umfasst, und wobei jede der Leitsystemkomponenten (100) mehrere Endpunkte mehrerer Tunnel des Teilnetzwerks einrichtet und jedem der Tunnel jeweils eine an diesen Tunnel angeschlossene Leitsystemkomponente (100) unter Verwendung zumindest einer Endgeräteadresse dieser Leitsystemkomponente (100) zuordnet.

9. Leitsystemkomponente (100) für ein Automatisierungsnetzwerk mit:
- Mitteln (106) zum Empfang oder zur Ausgabe von Daten, wobei die Daten Nutzerdaten und Automatisierungsdaten umfassen,
- einem Sicherheitsmodul (104), wobei das Sicherheitsmodul (104) zur Detektion, ob ein Empfang oder eine Ausgabe der Daten durch die Leitsystemkomponente (100) erlaubt ist, und zur Blockierung der Daten ausgebildet ist, falls detektiert wurde, dass die Daten nicht empfangen oder ausgegeben werden dürfen.

10. Automatisierungsnetzwerk mit einer Leitsystemkomponente (100) nach Anspruch 9.

11. Computerprogrammprodukt mit Instruktionen, wobei die Instruktionen bei Ausführung durch eine Leitsystemkomponente (100) nach Anspruch 9, die Leitsystemkomponente (100) zur Durchführung eines Verfahrens nach einem der Ansprüche 1-8 veranlassen.
